# EUROPEAN PATENT SPECIFICATION

(11) **EP 0 427 170 B1**
(45) Date of publication and mention of the grant of the patent: **02.02.1994**
(21) Application number: 90121123.5
(22) Date of filing: 05.11.1990
(51) Int. Cl.: A01D 46/24, A01D 46/26

(54) **Apparatus for gathering fruit**
Vorrichtung zum Einsammeln von Obst
Dispositif pour ramasser des fruits

(30) Priority: 08.11.1989 IT 1202489
(43) Date of publication of application: 15.05.1991
(73) Proprietor: SIGMA 4 S.r.l., 47100 Forli (IT)
(72) Inventor: Zecchini, Ivo, I-47100 Pievequinta (Forli) (IT)
(74) Representative: Modiano, Guido, Dr.-Ing.

(56) References cited:
- US-A- 3 561 205
- US-A- 3 623 306
- US-A- 3 864 899

## Description

The present invention relates to an apparatus for gathering fruit, and in particular to an apparatus for mechanically gathering hanging fruits, such as olives and the like.

Olives used to be picked by stripping them from the branches, i.e. by removing them manually, and placing them carefully in appropriate baskets, so as to avoid damaging them. Avoiding damaging the olives is important because broken olives ferment and spoil the oil contained therein even prior to crushing them.

The manual picking of olives, which is qualitatively appreciable but economically disadvantageous, is currently still performed only in areas which are difficult to access with ordinary mechanical means.

The need to reduce picking times and costs has in fact produced an increasingly widespread use of machines which cause the olives to fall by vibration: the product is gathered mostly by means of collection frames having the shape of an upturned umbrella, which can be separate from the vibrating machine or constitute an integral part thereof (vibrator harvesters).

Said machines have a vibrating head with counter-rotating eccentric masses, and a clamp adapted to be closed around the trunk of the plants in order to impart thereto a series of violent vibrations. However, said machines, unavoidably cause damage to the plants to the point of sometimes causing failure to produce fruit before the successive harvesting. Furthermore, the known vibrator-harvesters are scarcely effective, since the olives to be removed predominantly hang from small branches which are distant from the trunk, thus the flexibility of the small branches dampens the vibrations to which the trunk is subjected, even though the vibrations are violent.

Therefore, after operation of the machine, the harvesting or gathering must currently be completed by the manual intervention of beaters who, by violently striking the foliage from the outside with long poles, damage many of the small branches as well as much of the product to be gathered.

A fruit harvester apparatus having a horizontally and vertically adjustable picking head is known from US-A-3 561 205. The picking head is formed by a series of slidingly held, projecting rod-like fingers which are adapted to snap the fruit stems. Fruit is gathered by imparting to the rods a linear sliding reciprocating movement which however proves insufficient to cause the olives to fall.

Accordingly, the aim of the present invention is to solve the above described problem by providing an apparatus which achieves optimum mechanized gathering of olives and the like, operating effectively and without damaging the plants.

Within the scope of this aim, a further object of the present invention is to provide an apparatus for gathering olives and the like which is simple in concept, safe and reliable in operation and versatile in use.

This aim and this object, as well as other objects of the invention which will become apparent hereinafter are achieved, according to the invention, by an apparatus for gathering fruit, in particular olives and the like, as defined in the accompanying claims.

The details of the invention will become apparent from the detailed description of a preferred embodiment of the apparatus for gathering olives and the like, illustrated only by way of non-limitative example in the accompanying drawings, wherein:

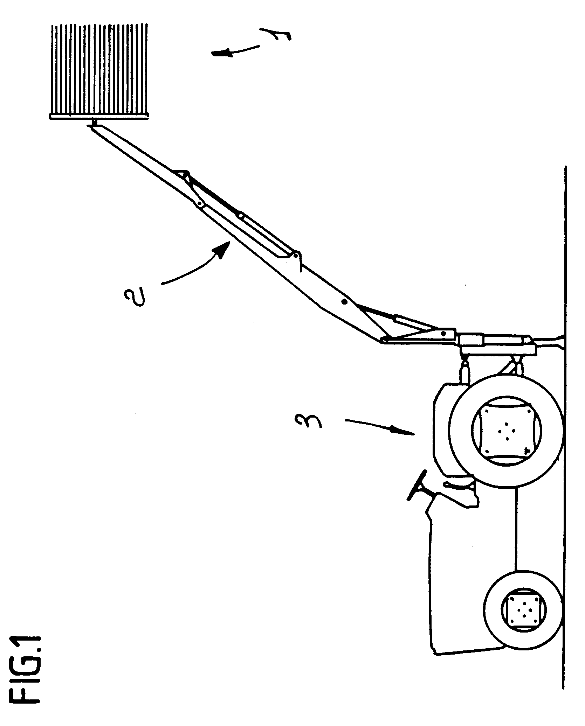

figure 1 is a schematic side view of the apparatus according to the invention;
figures 2 and 3 are respectively a rear view and a top view of the vibrator device of the apparatus according to the invention, wherein two oscillatable elements, resembling large brush-like elements, are visible;
figures 4, 5 and 6, 7 are corresponding rear and top views of different embodiments of said vibrator device;
figures 8, 9 and 10 are respectively a top view of further embodiments of the vibrator device, bearing two pairs of said oscillatable elements.

With particular reference to the above figures, the reference numeral 1 generally indicates the vibrator device which is intended to be applied to an articulated arm 2 of a self-propelled vehicle, for example a tractor 3.

The vibrator device 1 is constituted by a rigid frame 4 to which an even number of oscillatable elements 5, preferably four, is articulated in a parallel manner. Each of said oscillatable elements 5, which define large brush-like elements, is constituted by a panel or grid 6 having fixed thereto a plurality of parallel, uniformly distributed and flexible rods 7, adapted for being inserted between and striking foliage proximate to the fruits to be gathered. The rods 7 are preferably made of plastic material such as nylon, fiberglass or the like.

The oscillatable elements 5 can be actuated with a vibrating motion by means of a suitable kinematic transmission system actuated by a hydraulic motor element 8, which is connectable to the power unit of a tractor.

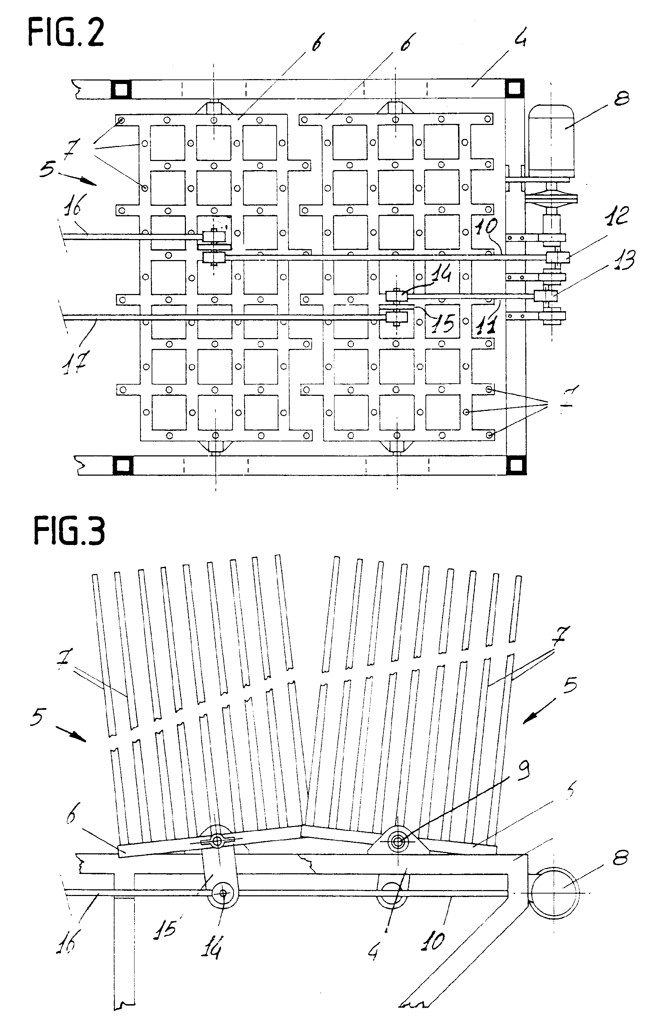

More in detail, the vibrator device illustrated in figures 2 and 3 has a pair of adjacent oscillatable elements 5 vertically pivoted in the frame 4 on pivots 9 arranged along a median plane with respect to the grids 6. The oscillatable elements 5 are actuated by means of respective traction elements 10, 11, moved in an oscillating manner by related eccentric elements 12, 13 which are offset by 180° and rotated by the motor 8 and kinematic transmission means which will be described hereinafter. The traction elements 10, 11 are articulated on respective pivots 14 to arms 15 which protrude rearward from the grids 6.

Further traction elements 16, 17, for the actuation of a second pair of oscillatable elements 5, can be respectively articulated on the pivots 14 of the arms 15. In practice, the oscillatable elements 5, which are expediently provided in an even number, so as to form two equivalent and opposite groups with a consequent balancing of the moving masses.

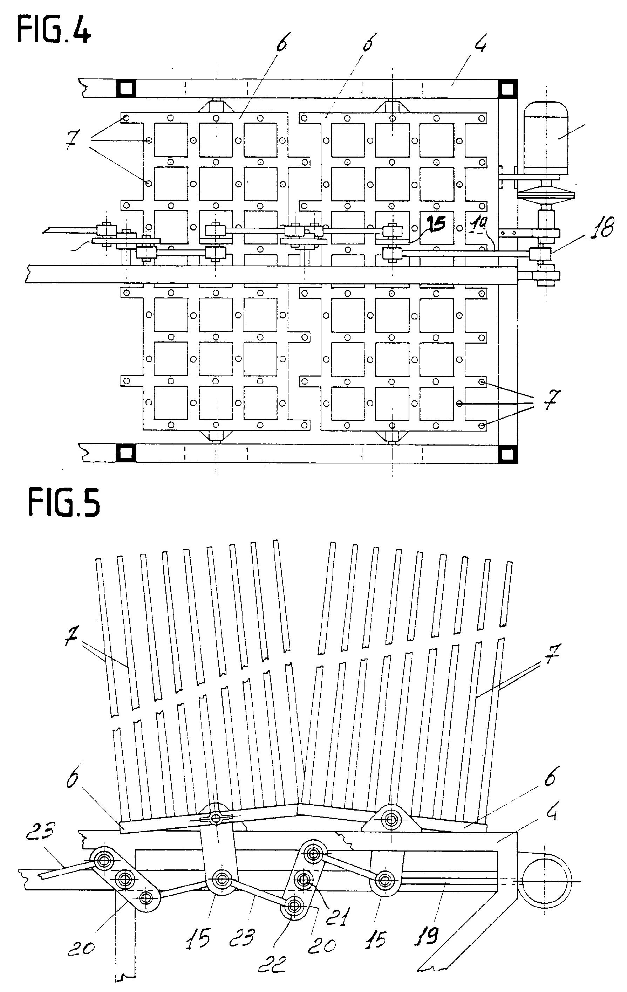

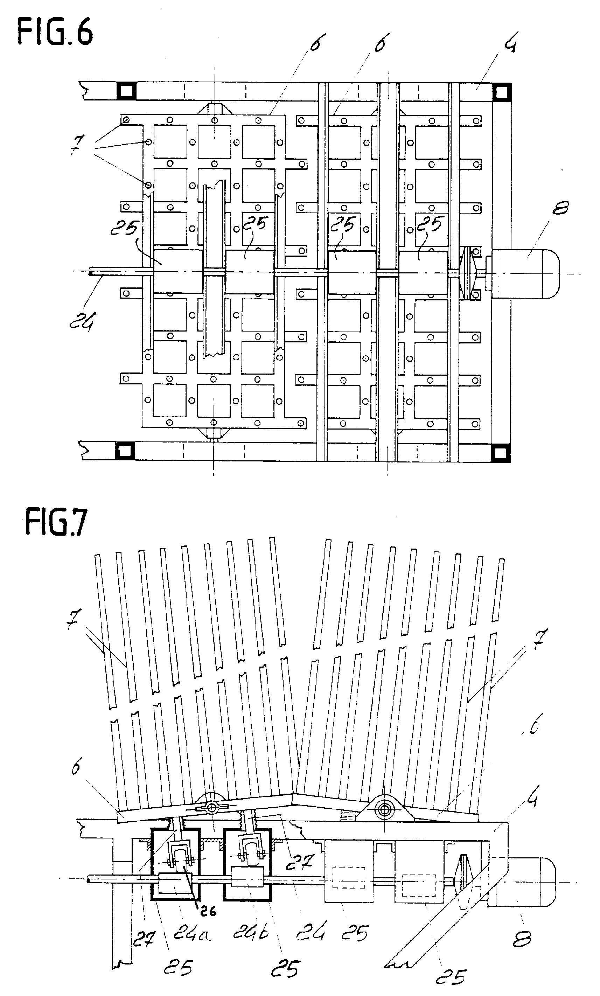

In the case illustrated in figures 4 and 5, the oscillatable elements 5 are actuated by the motor 8 by means of a single eccentric element 18, connected by means of a traction element 19 to the rear arm 15 of the first of said oscillatable elements 5. The transmission of the motion to the subsequent oscillatable elements is performed by means of respective reversal levers 20, pivoted centrally to the frame 4 on a pivot 21 and articulated at the opposite ends, at related pivots 22, to connecting rods 23 symmetrically connected to the arms 15 of the adjacent oscillatable elements.

However, in order to balance the moving masses, it is possible to reverse the motion only once between two groups of oscillatable elements arranged in succession and connected to one another by simple traction elements.

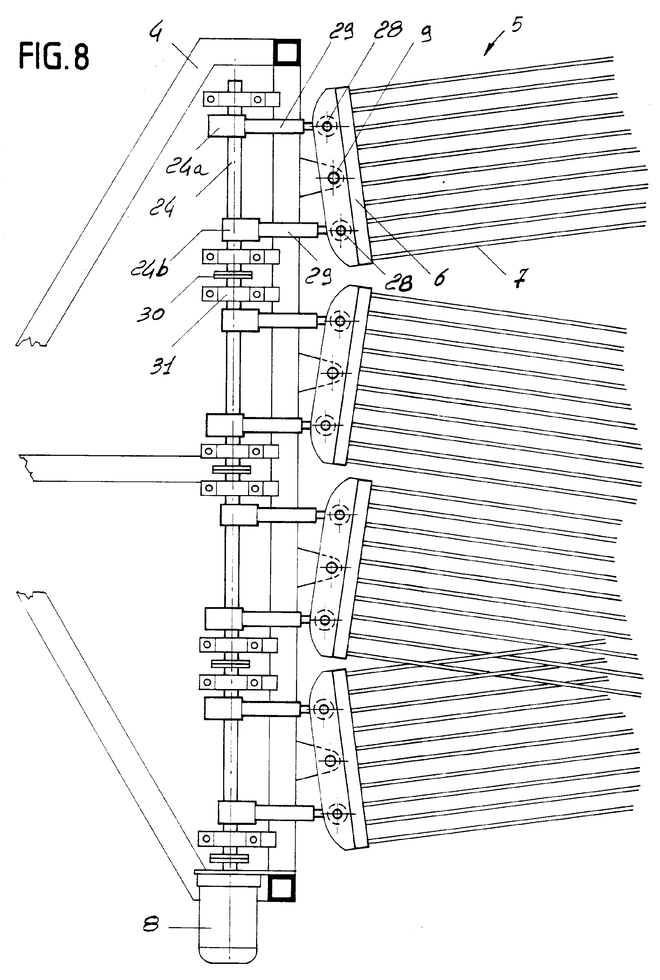

In the case illustrated in figures 6 and 7, the hydraulic motor 8 actuates a camshaft 24, arranged so that its axis is transverse to the axes whereat the oscillatable elements 5 are pivotally connected to the frame 4. The shaft 24 has, inside oil-bath boxes 25 fixed to the frame 4, respective pairs of cams 24a, 24b for generating movement of each oscillatable element 5. Respective rollers 26 rest against the cams 24a and 24b, which are mutually offset by 180°; said rollers are freely supported by adjustable pushers 27 protruding from the rear side of each oscillatable element. Obviously, when one of the cams 24a, 24b is in the active thrusting step the other one allows the retraction of the pusher which is temporarily passive.

Also in the case illustrated in figure 8, the oscillating elements 5 are actuated by a camshaft 24 driven by the hydraulic motor 8 about an axis which is transverse to the pivoting axes defined by the connections of said oscillatable elements to the frame 4. A pair of articulated heads 28, which are equidistant from the pivot 9 for pivoting each oscillating element 5 to the frame 4, couple the panel 6 of said oscillatable element to respective connecting rods 29; the connecting rods 29 receive motion from a related pair of eccentric elements or cams 24a, 24b of the shaft 24.

Appropriate elastic joints 30 connect the successive sections of the shaft 24, and each section is supported by supports 31 which are fixed onto the frame 4. It should be noted that since the oscillatable elements 5 are rigidly associated with the connecting rods 29 the transverse stresses in the pivot 9 are almost nil.

The entire connecting-rod kinematic system is conveniently contained inside an oil-bath box; a flywheel, not illustrated, provides the uniformity of the motion of the camshaft.

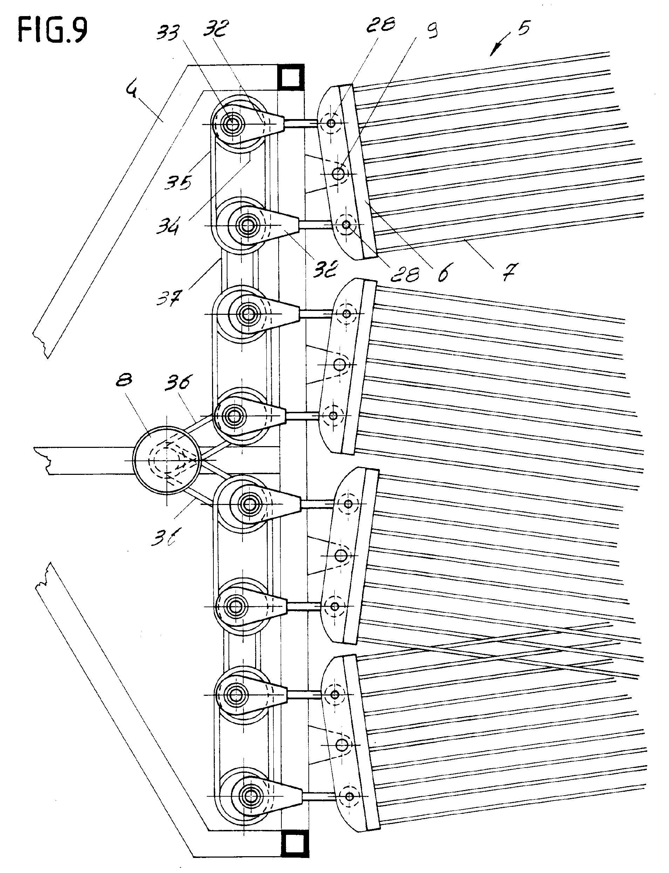

In the version illustrated in figure 9, the connecting rods 32, which are connected to the panel 6 of each oscillating element 5 on opposite sides with respect to the fulcrum 9, are pivoted at the eccentric pivots 33 of two respective pulleys 34 the axis whereof is parallel to said fulcrum 9; a toothed belt 35 is entrained around the pulleys 34.

By means of toothed belts or chains 36, the movement of the hydraulic motor 8, supported at the center of the frame 4, is transmitted to the pulleys of the two intermediate oscillatable elements. Further toothed belts 37, transmit motion from said pulleys to the respectively contiguous oscillatable elements.

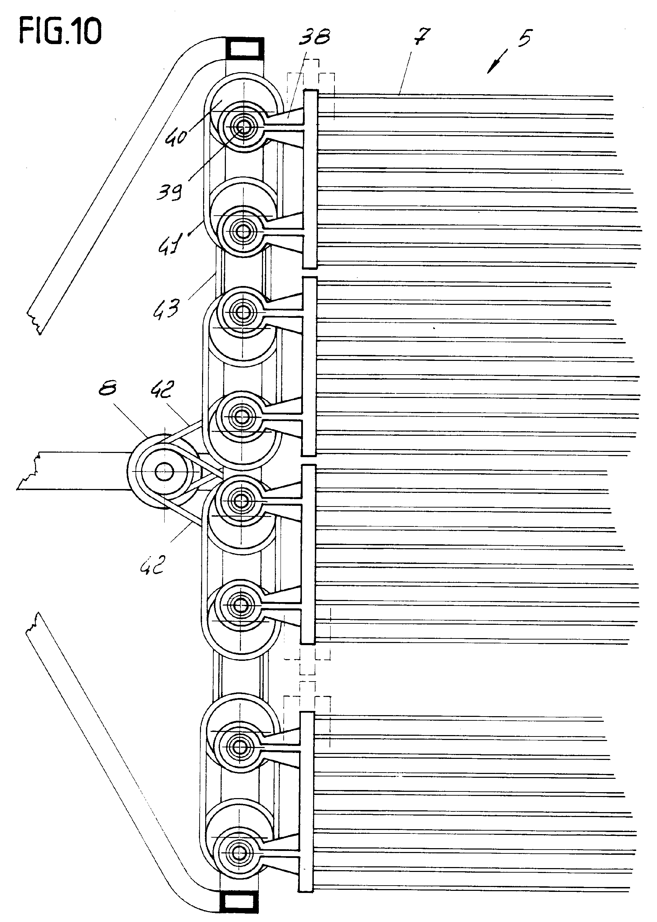

Finally, in the embodiment of figure 10 the oscillatable elements 5 are not pivoted to the frame 4, but each has a plurality of rigid arms 38 extending from the panels or grids 6 on the side opposite to the flexible rods 7. The arms 38 are pivoted to the eccentric pivots 39 of the pair of pulleys 40 which, as in the preceding embodiment, are connected by a toothed belt 41. The pulleys 40 are connected to the motor 8 by means of further toothed belts 42, 43. The eccentric pivots 39 of each pair of pulleys 40 are in corresponding positions, so that a continuous rotary motion, with a radius equal to the eccentricity of said pivots 39, is imparted to the oscillatable elements. The pivots 39 of the intermediate oscillatable elements are furthermore offset by half a turn with respect to those of the outer oscillatable elements.

In practice, in the different embodiments of the invention, the alternate movements of the two outer oscillatable elements are preferably opposite to the movements of the two intermediate elements. In this manner the forces acting on the oscillatable masses are counterbalanced; this compensation prevents the transmission of vibration to elements which differ from those specifically assigned to this purpose.

The described apparatus solves, in an innovative manner, the problem of mechanized gathering of hanging fruits, in particular the harvesting of olives. The vibrator device of the apparatus in fact ensures the fall of the product without damaging the integrity of the plant.

The elasticity of the flexible rods of the oscillatable elements and the frequency of the vibrations imparted thereto produce a serpentine motion which affects the entire length of said rods, making them effective, in every part thereof, for the vibrating operation. Even fruits located in the innermost part of the foliage are thus directly affected, ensuring their fall despite higher-than-normal separation resistances. Branches, leaves and products remain intact.

The vibrator device can be arranged, by virtue of the articulated arm by which it is supported, in any point of the foliage. The supporting apparatus naturally has arms with variable dimensions so as to facilitate work both on small plants and on trees of considerable height and size.

In a preliminary step, the apparatus is moved and secured proximate to the plant. The vibrating operation then begins.

By working on plants in the first years of productive activity it is possible to put the apparatus in place only once and perform the shaking operations on the entire arc of the foliage by intervening only on the supporting apparatus. Two placements may be necessary for larger plants. It should be noted that when working on rows of plants a single placement allows to intervene on two neighboring plants. In any case the gathering speed is very high.

Finally, it should be noted that the described apparatus can be conveniently used also to free the foliage of trees from snow.

Where technical features mentioned in any claim are followed by reference signs, those reference signs have been included for the sole purpose of increasing the intelligibility of the claims and accordingly, such reference signs do not have any limiting affect on the scope of each element identified by way of example by such reference signs.

## Claims

1. Apparatus for gathering fruit, in particular olives and the like, comprising: a vibrator device (1) adapted to be applied to an articulated arm (2) of a self-propelled vehicle (3); a rigid frame (4) having articulated thereto one or more pairs of oscillatable elements (5), each of said oscillatable elements (5) being constituted by a panel (6) defining a brush-like configuration and being actuated with an oscillating motion; and a plurality of flexible rods (7) being fixed on each of said oscillatable elements (5), said rods (7) being adapted for insertion between foliage and for striking foliage whereby to cause removal of the fruits to be gathered, characterized in that said oscillatable elements (5) are pivoted to said frame (4) on pivots (9) arranged along the median axis of respective panels (6).

2. Apparatus according to claim 1, characterized in that said flexible rods (7) extend in a substantially perpendicular manner from and along the whole front portion of the panels (6).

3. Apparatus according to either of claims 1 or 2, characterized in that it has at least four oscillatable elements (5) supported in a line by said frame (4), with parallel articulation axes, whereat said oscillatable elements (5) are actuated by a motor element (8) through kinematic means (24,35,36,37) for generating alternate movements of the two outer oscillatable elements equal and opposite to movements of the two intermediate elements, so as to compensate the stresses transmitted to said frame (4).

4. Apparatus according to claim 3, characterized in that said kinematic means (24,35,36,37) have eccentric means (24a,24b,33) which are rotated by said motor element (8).

5. Apparatus according to claim 4, characterized in that it has a pair of connecting rods (29,32) articulated to said panel (6) of each oscillatable element (5) on opposite sides with respect to said pivots (9), along parallel axes, said connecting rods (29,32) being actuated by said eccentric means (24a,24b,33) which are mutually offset by 180°.

6. Apparatus according to claim 5, characterized in that said connecting rods (29,32) are actuated by a camshaft (24) rotated by said motor element (8) according to a transverse axis, defined by the pivotal connection of said oscillatable elements (5) to said frame (4).

7. Apparatus according to claim 5, characterized in that said connecting rods (29,32) are pivoted to eccentric pivots (33) of a pair of respective pulleys (34), the axis whereof is parallel to the axis defined by said pivots (9) of said oscillatable elements (5), said connecting rods (29,32) receiving motion from said motor element (8) through flexible transmission means (35,36,37).

8. Apparatus according to either of claims 1 or 2, characterized in that said oscillatable elements (5) are actuated by means of traction elements (10,11) moved in an oscillating manner by eccentric means (12,13) rotated by a motor element (8).

9. Apparatus according to claim 8, characterized in that said traction elements (10,11) are articulated, on respective further pivots (14) with axes parallel to the axis defined by said pivots (9) of the oscillatable elements (5), to arms (15) which protrude rearward from said panels (6).

10. Apparatus according to either of claims 1 or 2, characterized in that it has an eccentric element (18) actuated by a motor element (8) and connected by means of a traction element (19) to a rear arm (15) of a first oscillatable element (5), transmission of the motion to the subsequent oscillatable elements (5) being effected by means of respective reversal levers (20) pivoted centrally to said rigid frame (4) and articulated, at the opposite ends, to connecting rods (23) symmetrically connected to corresponding rear arms (15) of adjacent oscillatable elements.

11. Apparatus according to either of claims 1 or 2, characterized in that it has a camshaft (24) actuated by a motor element (8) along an axis transverse to the axis defined by said pivots (9) of said oscillatable elements (5), said camshaft (24) defining pairs of cams (24a,24b) mutually offset by 180° and whereagainst respective pusher means (27) rest, said pusher means (27) protruding from the rear side of each oscillatable element (5).

12. Apparatus for gathering fruit, in particular olives and the like, comprising: a vibrator device (1) adapted to be applied to an articulated arm (2) of a self-propelled vehicle (3); a rigid frame (4) having articulated thereto at least one pair of oscillatable elements (5), each of said oscillatable elements (5) being constituted by a panel (6) defining a brush-like configuration and being actuated with an oscillating motion; and a plurality of flexible rods (7) being fixed on each of said oscillatable elements (5), said rods (7) being adapted for insertion between foliage and for striking foliage whereby to cause removal of the fruits to be gathered, characterized in that each of said oscillatable elements (5) has a plurality of rigid arms (38) which extend on the side opposite to said flexible rods (7), each of said rigid arms (38) being pivoted on eccentric pivots (39) of a respective pair of pulleys (40) which are connected by flexible transmission means (41,42,43) and receive their motion from a motor element (8), whereby to impart to said oscillatable elements (5) a continuous rotary motion equal in radius to the eccentricity of said pivots (39) of the pulleys (40).

## Patentansprüche

1. Vorrichtung zum Einsammeln von Obst, insbesondere Oliven und dergleichen, mit einer Vibrationseinrichtung (1), die an einem Gelenkarm (2) eines Fahrzeugs (3) mit Eigenantrieb anbringbar ist, einem starren Rahmen (4), an dem ein oder mehrere Paare von in Schwingung versetzbaren Elementen (5) gelenkig angebracht sind, wobei jedes in Schwingung versetzbare Element (5) durch eine Tafel (6) gebildet ist, die eine bürstenartige Struktur festlegt und mit einer Schwingbewegung betätigt wird, und einer Mehrzahl von flexiblen Stäben (7), die an den einzelnen in Schwingung versetzbaren Elementen (5) befestigt sind, wobei die Stäbe (7) für ein Einführen zwischen das Blattwerk und zum Schlagen des Blattwerks ausgelegt sind, um dadurch die einzusammelnden Früchte zu lösen, dadurch gekennzeichnet, daß die in Schwingung versetzbaren Elemente (5) über entlang der Mittelachse der jeweiligen Tafeln (6) angeordnete Zapfen (9) schwenkbar an dem Rahmen (4) angebracht sind.

2. Vorrichtung nach Anspruch 1, dadurch gekennzeichnet, daß sich die flexiblen Stäbe (7) im wesentlichen senkrecht von den Tafeln (6) weg und entlang des gesamten Vorderabschnitts der Tafeln (6) erstrecken.

3. Vorrichtung nach Anspruch 1 oder 2, dadurch gekennzeichnet, daß sie zumindest vier in Schwingung versetzbare Elemente (5) aufweist, die in einer Linie mit parallelen Gelenkachsen von dem Rahmen (4) getragen werden, wobei die in Schwingung versetzbaren Elemente (5) durch ein Motorelement (8) über kinematische Mittel (24, 35, 36, 37) zur Erzeugung von hin- und hergehenden Bewegungen der beiden äußeren in Schwingung versetzbaren Elementen betätigt werden, die zu Bewegungen der beiden dazwischenliegenden Elemente gleich und entgegengesetzt sind, um die auf den Rahmen (4) übertragenen Belastungen zu kompensieren.

4. Vorrichtung nach Anspruch 3, dadurch gekennzeichnet, daß die kinematischen Mittel (24, 35, 36, 37) Exzentermittel (24a, 24b, 33) aufweisen, die durch das Motorelement (8) in Drehung versetzt werden.

5. Vorrichtung nach Anspruch 4, dadurch gekennzeichnet, daß sie ein Paar von Verbindungsstangen (29, 32) aufweisen, die an der Tafel (6) eines jeden in Schwingung versetzbaren Elements (5) auf bezüglich der Zapfen (9) entgegengesetzten Seiten entlang paralleler Achsen gelenkig angebracht sind, wobei die Verbindungsstäbe (29, 32) durch die Exzentermittel (24a, 24b, 33) betätigt werden, die um 180° gegeneinander versetzt sind.

6. Vorrichtung nach Anspruch 5, dadurch gekennzeichnet, daß die Verbindungsstäbe (29, 32) durch eine Nockenwelle (24) betätigt werden, die durch das Motorelement (8) in Drehung versetzt wird und einer Querachse entspricht, die durch die Schwenkverbindung der in Schwingung versetzbaren Elemente (5) mit dem Rahmen (4) definiert ist.

7. Vorrichtung nach Anspruch 5, dadurch gekennzeichnet, daß die Verbindungsstäbe (29, 32) schwenkbar an Exzenterzapfen (33) eines Paars von jeweiligen Rollen (34) angebracht sind, deren Achse parallel zu der Achse ist, die durch die Zapfen (9) der in Schwingung versetzbaren Elemente (9) definiert ist, wobei die Verbindungsstäbe (29, 32) über flexible Übertragungsmittel (35, 36, 37) durch das Motorelement (8) in Bewegung versetzt werden.

8. Vorrichtung nach Anspruch 1 oder 2, dadurch gekennzeichnet, daß die in Schwingung versetzbaren Elemente (5) durch Mitnahmeelemente (10, 11) betätigt werden, die durch Exzentermittel (12, 13) in eine Schwingbewegung versetzt werden, die durch ein Motorelement (8) in Drehung versetzt werden.

9. Vorrichtung nach Anspruch 8, dadurch gekennzeichnet, daß die Mitnahmemittel (10, 11) über weitere jeweilige Zapfen (14) mit zu der durch die Zapfen (9) der in Schwingung versetzbaren Elemente (5) definierten Achse parallelen Achsen gelenkig an Armen (15) angebracht sind, die von den Tafeln (6) nach hinten abstehen.

10. Vorrichtung nach Anspruch 1 oder 2, dadurch gekennzeichnet, daß sie ein Exzenterelement (18) aufweist, das durch ein Motorelement (8) betätigt wird und mittels eines Mitnahmeelements (19) mit einem hinteren Arm (15) eines ersten in Schwingung versetzbaren Elements (5) verbunden ist, wobei die Übertragung der Bewegung auf die folgenden in Schwingung versetzbaren Elemente (5) durch jeweilige Umkehrhebel (20) erfolgt, die mittig an dem starren Rahmen (4) schwenkbar angebracht und an den einander gegenüberliegenden Enden an den Verbindungsstäben (23) angelenkt sind, die symmetrisch mit entsprechenden hinteren Armen (15) benachbarter in Schwingung versetzbarer Elemente verbunden sind.

11. Vorrichtung nach Anspruch 1 oder 2, dadurch gekennzeichnet, daß sie eine Nockenwelle (24) aufweist, die durch ein Motorelement (8) betätigt wird und entlang einer Achse vorgesehen ist, die quer zu der Achse verläuft, die durch die Zapfen (9) der in Schwingung versetzbaren Elemente (5) definiert ist, wobei die Nockenwelle (24) Paare von Nocken (24a, 24b) festlegt, die um 180° gegeneinander versetzt sind und an denen Stoßmittel (27) anliegen, die von der Rückseite eines jeden in Schwingung versetzbaren Elements (5) abstehen.

12. Vorrichtung zum Einsammeln von Obst, insbesondere Oliven und dergleichen, mit einer Vibrationseinrichtung (1), die an einem Gelenkarm (2) eines Fahrzeugs (3) mit Eigenantrieb anbringbar ist, einem starren Rahmen (4), an dem wenigstens ein Paar von in Schwingung versetzbaren Elementen (5) gelenkig angebracht ist, wobei jedes der in Schwingung versetzbaren Elemente (5) durch eine Tafel (6) gebildet ist, die eine bürstenartige Struktur festlegt und durch eine Schwingbewegung betätigt wird, und einer Mehrzahl von flexiblen Stäben (7), die an den jeweiligen in Schwingung versetzbaren Elementen (5) befestigt sind, wobei die Stäbe (7) für ein Einsetzen zwischen das Blattwerk und zum Schlagen des Blattwerks ausgelegt sind, wodurch die einzusammelnden Früchte gelöst werden, dadurch gekennzeichnet, daß jedes der in Schwingung versetzbaren Elemente (5) eine Mehrzahl von starren Armen (38) aufweist, die sich auf der den flexiblen Stäben (7) gegenüberliegenden Seite erstrecken, wobei jeder starre Arm (38) schwenkbar an Exzenterzapfen (39) eines jeweiligen Paars von Rollen (40) angebracht ist, die durch flexible Übertragungsmittel (41, 42, 43) verbunden sind und durch ein Motorelement (8) in Bewegung versetzt werden, um den schwingbaren Elementen (5) eine kontinuierliche Drehbewegung zu verleihen, deren Radius gleich dem der Exzentrizität der Zapfen (39) der Rollen (40) ist.

## Revendications

1. Appareil de ramassage des fruits, en particulier des olives et similaires, comprenant : un dispositif vibrateur (1) adapté pour être monté sur un bras articulé (2) d'un véhicule auto-propulsé (3) ; un châssis rigide (4) sur lequel sont articulés une ou plusieurs paires d'éléments oscillants (5), chaque élément oscillant (5) étant constitué par un panneau (6) dont la configuration est du type brosse et qui est animé d'un mouvement oscillant ; et une pluralité de tiges souples (7) qui sont fixées sur chacun des éléments oscillants (5), lesdites tiges (7) étant adaptées pour être insérées dans une fondaison et pour battre la fondaison de manière à provoquer la séparation des fruits à ramasser, caractérisé en ce que lesdits éléments oscillants (5) sont montés à pivotement sur ledit châssis (4) au moyen de pivots (9) disposés sur l'axe médian des panneaux respectifs (6).

2. Appareil selon la revendication 1, caractérisé en ce que les tiges souples (7) s'étendent sensiblement perpendiculairement à partir de et sur toute la partie frontale des panneaux (6).

3. Appareil selon l'une des revendications 1 ou 2, caractérisé en ce qu'il comprend au moins quatre éléments oscillants (5) supportés en ligne par ledit châssis (4) et dont les axes d'articulation sont parallèles, de façon que lesdits éléments oscillants (5) soient entraînés par un moteur (8) par l'intermédiaire d'une chaîne cinématique (24,35,36,37) de façon à générer des mouvements alternés des deux éléments oscillants externes égaux et opposés aux mouvements des deux éléments intermédiaires, de façon à compenser les contraintes transmises audit châssis (4).

4. Appareil selon la revendication 3, caractérisé en ce que la chaîne cinématique (24,35,36,37) comprend des organes excentriques (24a, 24b, 33) qui sont entraînés en rotation par ledit moteur (8).

5. Appareil selon la revendication 4, caractérisé en ce qu'il comprend une paire de tiges de liaison (29, 32) articulée sur ledit panneau (6) de chaque élément oscillant (5) sur les côtés opposés par rapport auxdits pivots (9), le long d'axes parallèles, les tiges de liaison (29, 32) étant entraînées par lesdits organes excentriques (24a, 24b, 33) qui sont mutuellement décalés de 180°.

6. Appareil selon la revendication 5, caractérisé en ce que les tiges de liaison (29, 32) sont entraînées au moyen d'un arbre à came (24) entraîné en rotation par ledit moteur (8) suivant un axe transverse, défini par la liaison de pivotement des éléments oscillants (5) sur ledit châssis (4).

7. Appareil selon la revendication 5, caractérisé en ce que les tiges de liaison (29, 32) sont pivotantes sur les pivots excentriques (33) d'une paire de poulies respectives (34) dont l'axe est parallèle à l'axe défini par lesdits pivots (9) desdits éléments oscillants (5), lesdites tiges de liaison (29, 32) recevant le mouvement à partir du moteur (8) par l'intermédiaire d'organes de transmission souples (35, 36, 37).

8. Appareil selon l'une des revendications 1 ou 2, caractérisé en ce que les éléments oscillants (5) sont entraînés au moyen d'éléments de traction (10, 11) qui se déplacent d'une façon oscillante grâce à des organes excentriques (12, 13) entraînés en rotation par un moteur (8).

9. Appareil selon la revendication 8, caractérisé en ce que les éléments de traction (10, 11) sont articulés respectivement par des pivots supplémentaires (14) dont les axes sont parallèles à l'axe défini par lesdits pivots (9) des éléments oscillants (5) à des bras (15) qui s'étendent vers l'arrière à partir des panneaux (6).

10. Appareil selon l'une des revendications 1 ou 2, caractérisé en ce qu'il comprend un élément excentrique (18) entraîné par un moteur (8) et relié par un élément de traction (19) à un bras arrière (15) d'un premier élément oscillant (5), la transmission du mouvement des éléments oscillants subséquents (5) étant effectuée au moyen de leviers d'inversion respectifs (20) qui sont montés à pivotement en leur centre sur le châssis rigide et articulés, aux extrémités opposées, sur les tiges de liaison (23) reliées symétriquement aux bras arrières correspondants (15) des éléments oscillants adjacents.

11. Appareil selon l'une des revendications 1 ou 2, caractérisé en ce qu'il comprend un arbre à came (24) entraîné par un moteur (8) sur un axe transverse à l'axe défini par lesdits pivots (9) desdits éléments oscillants (5), ledit arbre à came (24) définissant une paire de cames (24a, 24b) mutuellement décalées de 180° et sur lesquelles s'appuient des moyens poussoirs (27), lesdits moyens poussoirs (27) s'étendant à partir du côté arrière de chaque élément oscillant (5).

12. Appareil de ramassage de fruits en particulier des olives et similaires, comprenant : un dispositif vibrateur (1) adapté pour être monté sur un bras articulé (2) d'un véhicule auto-propulsé (3) ; un châssis rigide (4) sur lequel est articulé au moyen une paire d'éléments oscillants (5), chaque élément oscillant (5) étant constitué par un panneau (6) dont la configuration est du type brosse et qui est animé d'un mouvement oscillant ; et une pluralité de tiges souples (7) qui sont fixées sur chacun des éléments oscillants (5), lesdites tiges (7) étant adaptées pour être insérées dans une fondaison et pour battre la fondaison de manière à provoquer la séparation des fruits à ramasser, caractérisé en ce que chacun desdits éléments oscillants (5) comporte une pluralité de bras rigides (38) qui s'étendent sur le côté opposé aux tiges souples (7), chacun desdits bras rigides (38) étant monté à pivotement sur des pivots excentriques (39) d'une paire respective de poulies (40) qui sont reliées par des moyens de transmission souple (41, 42, 43) et qui reçoivent leur mouvement à partir d'un organe moteur (8), de manière à imprimer auxdits éléments oscillants (5) un mouvement de rotation continu de rayon égal à l'excentricité des pivots (39) des poulies (40).
